# EUROPÄISCHE PATENTSCHRIFT

(11) **EP 3 505 681 B1**
(45) Veröffentlichungstag und Bekanntmachung des Hinweises auf die Patenterteilung: **26.05.2021**
(21) Anmeldenummer: 18213633.3
(22) Anmeldetag: 18.12.2018
(51) Int. Cl.: E01C 19/20

(54) **SILOFAHRZEUG UND ARBEITSZUG**
SILO VEHICLE AND WORK TRAIN
VÉHICULE CITERNE ET TRAIN DE TRAVAUX

(30) Priorität: 22.12.2017 DE 102017223698
(43) Veröffentlichungstag der Anmeldung: 03.07.2019
(73) Patentinhaber: Wirtgen GmbH, 53578 Windhagen (DE)
(72) Erfinder: MENZENBACH, Christoph, 53577 Neustadt/Wied (DE); BARIMANI, Cyrus, 53639 Königswinter (DE); HESS, Frederic, 56410 Montabaur (DE)
(74) Vertreter: dompatent von Kreisler Selting Werner - Partnerschaft von Patent- und Rechtsanwälten mbB

(56) Entgegenhaltungen:
- EP-A1- 2 388 217
- DE-A1- 2 939 648
- DE-A1- 3 910 617
- DE-A1-102012 021 421

## Beschreibung

Die Erfindung betrifft ein Silofahrzeug zur Bereitstellung von Bindemitteln zur Bodenstabilisierung für eine Streueinrichtung gemäß dem Oberbegriff des unabhängigen Anspruchs 1.

Ferner betrifft die Erfindung einen Arbeitszug zur Bearbeitung von Böden mit einer selbstfahrenden Bodenbearbeitungsmaschine sowie einem Silofahrzeug.

Mit Hilfe von insbesondere pulverförmigem Bindemittel, wie bspw. Kalk oder Zement, kann ein Verbessern bzw. Verfestigen von Böden erfolgen. Hierzu wird das Bindemittel in den Boden eingebracht, um insbesondere dessen Tragfähigkeit zu erhöhen. Eine Bodenstabilisierung erfolgt insbesondere beim Bau von Straßen oder Schienenwegen, sowie beim Bau von Industrieflächen.

Zum Ausbringen von Bindemittel, sind Bindemittelstreuer bekannt. Derartige Fahrzeuge weisen einen großen Behälter zur Aufnahme von Bindemittel auf. Das Ausbringen von Bindemittel erfolgt derart, dass das Streufahrzeug dem Stabilisierer oder Recycler vorausfährt. Durch den Stabilisierer oder Recycler wird beispielsweise mit Hilfe einer Fräs-/Mischwalze eine obere Schicht einer zu befestigenden Fläche abgefräst, das abgefräste Material wird ggf. mit weiterem Material vermischt und wieder ausgebracht. Das von dem Bindemittelstreuer vor dem Stabilisierer oder Recycler ausgebrachte Bindemittel wird hierbei mit aufgenommen. Nachteilig bei derartigen vorausfahrenden Bindemittelstreuern ist, dass das Bindemittel verweht werden kann. Dies erhöht die Kosten auf Grund des erhöhten Materialbedarfs und führt zu Staubbelastungen für die Arbeiter und Anwohner.

Ferner sind Stabilisierer und Recycler bekannt, die einen Bindemittelsteuer aufweisen. Ein derartiger Stabilisierer oder Recycler mit integriertem Bindemittelstreuer ist bspw. aus DE 10 2009 008 884 bekannt. Hierdurch ist es möglich, das Bindemittel bspw. unmittelbar vor dem Fräs-/Mischrotor auszubringen, sodass das Bindemittel unmittelbar von dem Fräs-/Mischrotor aufgenommen wird. Hierbei besteht die Gefahr des Verwehens nicht. Andererseits weisen derartige Stabilisierer oder Recycler mit integriertem Bindemittelbehälter den Nachteil auf, dass ein derartiger Bindemittelbehälter ein geringes Füllvolumen aufweist und daher regelmäßig befüllt werden muss. Das Befüllen eines derartigen Bindemittelbehälters erfolgt durch ein Silofahrzeug. Aus dem Silofahrzeug wird in regelmäßigen Abständen Bindemittel dem Bindemittelbehälter des Stabilisierers oder Recyclers zugeführt. Das Zuführen erfolgt bspw. pneumatisch. Hierzu wird der Bindemittelbehälter des Silofahrzeugs zur Befüllung unter Druck gesetzt. Ein Befüllen des Behälters des Stabilisierers oder Recyclers während der Fahrt ist nur eingeschränkt möglich.

Aus DE 20 2008 012 104 ist ein Arbeitszug, bestehend aus einem Silofahrzeug und einem Fräsfahrzeug bekannt. Das Fräsfahrzeug weist einen Vorratsbehälter für ein Schüttgut, wie ein Bindemittel auf. Dieser weist ein kleines Volumen auf und wird insofern permanent von dem Silofahrzeug befüllt. Das Silofahrzeug ist hierbei derart aufgebaut, dass nicht der gesamte Bindemittelbehälter des Silofahrzeugs unter Druck gesetzt werden muss. Vielmehr ist in dem Bindemittelbehälter des Silofahrzeugs eine mechanische Transporteinrichtung angeordnet, die das Schüttgut bspw. Mittels einer Förderschnecke in eine Kammer fördert. Aus der Kammer wird das Schüttgut sodann pneumatisch über eine Transportleitung zu dem Vorratsbehälter des Fräsfahrzeugs gefördert. Nachteilig ist hierbei allerdings, dass durch die pneumatische Förderung ein Aufwirbeln des Bindemittels auch in dem Bindemittelbehälter des Silofahrzeugs erfolgt. Dies kann zu einer ungleichmäßigen Zuführung an Bindemittel zu dem Vorratsbehälter des Fräsfahrzeugs führen. Ferner besteht der Nachteil, dass innerhalb des Silofahrzeugs eine erhöhte Staubentwicklung entsteht. Dies führt zu höheren Belastungen der Filteranlagen und kann ferner auch Störungen bei Sensoren, insbesondere innerhalb des Silofahrzeugs angeordneter Füllstandssensoren, hervorrufen.

Aus DE 29 39 648 ist ein Silofahrzeug mit den Merkmalen des Oberbegriffs des Anspruchs 1 bekannt.

Aufgabe der Erfindung ist es, ein Silofahrzeug zur Bereitstellung von Bindemittel zur Bodenstabilisierung für eine Streueinrichtung zu schaffen, mit der eine zuverlässige Bindemittelzufuhr möglich ist sowie einen entsprechenden Arbeitszug zu schaffen.

Die Lösung der Aufgabe erfolgt erfindungsgemäß durch ein Silofahrzeug gemäß Anspruch 1 sowie einen Arbeitszug zur Bearbeitung von Böden, wie Straßen, Schienenwegen, Industrieflächen etc. mit einer Bodenbearbeitungsmaschine und einem Arbeitszug nach Anspruch 11.

Mit Hilfe des Silofahrzeugs erfolgt insbesondere ein Befüllen eines Bindemittelbehälters einer Bodenbearbeitungsmaschine wie eines Stabilisierers oder Recyclers, wie beispielsweise in DE 10 2009 008 884 beschrieben. Das erfindungsgemäße Silofahrzeug zur Bereitstellung von Bindemittel zur Bodenstabilisierung bei einer Streueinrichtung weist einen Vorratsbehälter für das Bindemittel auf. Mit dem Vorratsbehälter ist eine mechanische Fördereinrichtung verbunden. Mit Hilfe der Fördereinrichtung erfolgt ein Fördern des Bindemittels aus dem Vorratsbehälter in eine Zwischenkammer. Mit der Zwischenkammer ist eine pneumatische Fördereinrichtung verbunden. Mit Hilfe der pneumatischen Fördereinrichtung wird das Bindemittel zu der Streueinrichtung gefördert, wobei die Streueinrichtung insbesondere einen Vorratsbehälter, bzw. Zwischenpuffer aufweist. Die Streueinrichtung ist insbesondere unmittelbar an einer Bodenbearbeitungsmaschine vorgesehen. Erfindungsgemäß ist mit der mechanischen Fördereinrichtung eine Druckentlastungseinrichtung verbunden. Durch die Druckentlastungseinrichtung ist im Wesentlichen ein Eindringen von Druckluft in einen Bereich des Vorratsbehälters des Silofahrzeugs vermieden, in dem ein Aufwirbeln des Bindemittels in dem Vorratsbehälter des Silofahrzeugs eine zuverlässige Förderung beeinträchtigen würde.

Bei der Druckentlastungseinrichtung kann es sich um ein mit der mechanischen Fördereinrichtung verbundenes Ventil handeln. Über das Ventil kann ggf. in der mechanischen Fördereinrichtung entstehender Druck reduziert, bzw. Druckluft abgeführt werden. Die entsprechende Druckluft kann unmittelbar in die Umgebung abgeführt werden, wobei es bevorzugt ist, dass eine Filtereinrichtung vorgesehen ist, um ein Austreten von Bindemittel zu vermeiden. Insbesondere beim Vorsehen einer Filtereinrichtung ist es nicht unbedingt erforderlich zusätzlich ein Ventil vorzusehen. Eine entsprechende Auslassöffnung in der mechanischen Fördereinrichtung durch die Druckluft entweichen kann, ist ausreichend.

Bei der mechanischen Fördereinrichtung handelt es sich bspw. um einen Schwerkraftförderer. Hierbei kann insbesondere ein Fördern des Bindemittels aufgrund des Eigengewichts erfolgen, wobei das Fördern des Bindemittels bspw. auch durch einen Schneckenförderer oder dergleichen unterstützt werden kann.

Um ein Aufwirbeln von Streumittel durch Eindringen der Druckluft in den Vorratsbehälter des Silofahrzeugs in einem Aufwirbelungen hervorrufenden Bereich, wie insbesondere in dem Bereich der Abfuhr des Streumittels zu vermeiden, ist es besonders bevorzugt, dass die mechanische Fördereinrichtung eine Förderkammer aufweist. Hierbei kann bspw. eine Fördereinrichtung entsprechend einer Schleuse ausgebildet sein. So kann über entsprechende Schieber eine Öffnung zu dem Vorratsbehälter geöffnet und geschlossen werden und über weitere Schieber kann eine Verbindung zwischen der Förderkammer und der Zwischenkammer geöffnet und geschlossen werden. Entsprechend einer Schleuse kann die Förderkammer somit zunächst durch Öffnen des entsprechenden Schiebers aus dem Vorratsbehälter mit Bindemittel befüllt werden, wobei die Schieber sodann geschlossen wird bevor der die Öffnung zur Zwischenkammer verschließende Schieber geöffnet wird. Hierdurch dringt aus der Zwischenkammer stets nur Druck in die Förderkammer ein. Die Förderkammer ist sodann erfindungsgemäß mit der Druckentlastungseinrichtung verbunden, sodass der Druck in der Förderkammer reduziert werden kann, bevor durch das Betätigen des entsprechenden Schiebers die Schleuse wieder mit dem Vorratsbehälter zum Befüllen mit Bindemittel verbunden wird.

In besonders bevorzugter Ausführungsform handelt es sich bei der mechanischen Fördereinrichtung um einen Zellenradförderer. Dieser weist insbesondere mehrere, um eine Drehachse angeordnete Förderkammern auf. In eine in Richtung des Vorratsbehälters, offene Förderkammer gelangt Bindemittel unter Schwerkraft oder mit Hilfe einer weiteren Fördereinrichtung. Die entsprechende Förderkammer wird sodann durch den Zellenradbeförderer weitergedreht bis das sich in der entsprechenden Kammer befindliche Bindemittel aus dieser, aufgrund der Schwerkraft, in die Zwischenkammer gelangt. Mit Hilfe eines Zellenradförderers ist es insbesondere möglich ein kontinuierliches Fördern von Bindemittel von mehreren um eine Drehachse angeordneten Förderkammern zu realisieren. In eine mit der Zwischenkammer verbundene Förderkammer gelangt Druckluft, bzw. der Druck in dieser Förderkammer erhöht sich. Bevor diese Förderkammer wieder mit dem Vorratsbehälter verbunden wird, erfolgt mit Hilfe der Druckentlastungseinrichtung eine Druckreduzierung in dieser Förderkammer. Hierzu wird beim Weiterdrehen des Zellenradförderers die Verbindung der entsprechenden Förderkammer mit der Zwischenkammer unterbrochen. In dieser Lage erfolgt die Druckentlastung.

Unabhängig von der Art der verwendeten Fördereinrichtung ist es daher besonders bevorzugt, dass die Druckentlastungseinrichtung in einem Bereich angeordnet ist, in dem eine diesen Bereich passierende Förderkammer, weder mit dem Vorratsbehälter noch mit der Zwischenkammer verbunden ist.

Erfindungsgemäß ist die Druckentlastungseinrichtung über eine Entlüftungsleitung mit dem Vorratsbehälter verbunden. Die Druckentlastungseinrichtung kann lediglich durch die Verbindung der mechanischen Fördereinrichtung über eine Entlüftungsleitung mit dem Vorratsbehälter ausgebildet sein. Ggf. kann in der Entlüftungsleitung zusätzlich ein Ventil vorgesehen sein. Vorzugsweise ist die Entlüftungsleitung mit einem Bereich des Vorratsbehältnisses verbunden indem durch Einleiten von Luft entweder keine Aufwirbelungen von Bindemittel auftreten oder diese nicht störend sind. Das Einleiten der Druckluft in den Vorratsbehälter erfolgt vorzugsweise in einem oberen und/oder einem von der mechanischen Fördereinrichtung entfernten Bereich des Vorratsbehälters.

Vorzugsweise weist der Vorratsbehälter einen Überdruckauslass auf. Dieser weist vorzugsweise eine Filtereinrichtung auf, um ein Austreten von Bindemittel zu vermeiden. In bevorzugter Weiterbildung ist die Entlüftungsleitung der Druckentlastungseinrichtung mit dem Überdruckauslass, insbesondere unmittelbar verbunden. Hierdurch ist ein Auftreten von Verwirbelungen in dem Vorratsbehälter vermieden.

Zum Fördern des Bindemittels aus der Zwischenkammer zu der Streueinrichtung, ist es bevorzugt, dass die pneumatische Fördereinrichtung eine Druckluftquelle, insbesondere einen Kompressor aufweist. Der Kompressor ist entweder unmittelbar oder über eine Druckleitung mit der Zwischenkammer verbunden. Das Verwenden eines Kompressors als pneumatische Fördereinrichtung, hat einerseits den Vorteil, dass hierdurch eine schnellere Förderung des Bindemittels aus der Zwischenkammer zu der Streueinrichtung realisiert werden kann und andererseits ein derartiger Kompressor üblicherweise bei Silofahrzeugen insbesondere zur Reinigung vorhanden ist.

Bei einer weiteren bevorzugten Ausführungsform ist der Vorratsbehälter des Silofahrzeugs mit mehreren mechanischen Fördereinrichtungen verbunden. Vorzugsweise sind ggf. mehrere separate Zwischenkammern vorgesehen, wobei ggf. jede Zwischenkammer mit einer gesonderten mechanischen Fördereinrichtung verbunden ist. Insbesondere weist jede mechanische Fördereinrichtung eine separate Druckentlastungseinrichtung auf.

Beim Vorsehen mehrerer Zwischenkammern sind diese vorzugsweise bezüglich der pneumatischen Beförderung in Reihe angeordnet. Das Bindemittel wird somit in bevorzugter Ausführungsform bspw. von einer ersten Zwischenkammer zunächst in eine zweite Zwischenkammer gefördert und sodann von dieser zur Streueinrichtung. Ferner ist auch ein zueinander paralleles Anordnen mehrerer Zwischenkammern möglich.

Bei einer bevorzugten Weiterbildung der Erfindung weist das Silofahrzeug ferner eine die mindestens eine Zwischenkammer umgehende pneumatische Bypassleitung auf. Diese zweigt einerseits insbesondere von der Druckleitung, d.h. der Leitung zwischen der Druckluftquelle und der Zwischenkammer ab und ist andererseits mit der Förderleitung, d.h. der von der mindestens einen Zwischenkammer zur Streueinrichtung führenden Leitung verbunden. Hierdurch ist es möglich in der Förderleitung einen höheren Druckluftstrom, bzw. höheren Druck zu erzeugen und somit ein sicheres Zuführen eines Bindemittels zu der Streueinrichtung zu gewährleisten. Auch kann die Bypassleitung beim Vorsehen mehrerer Zwischenkammern ggf. nur eine Zwischenkammer überbrücken. Ferner sind auch mehrere Bypassleitungen möglich, die jeweils eine oder mehrere Zwischenkammern überbrücken. Auch Abzweigungen in einer mehrere Zwischenkammern überbrückende Bypassleitung, die sodann mit einer Leitung verbunden ist, die zwei benachbarte Zwischenkammern verbindet, ist möglich. Die eine oder mehreren Bypassleitungen können vorzugsweise teilweise oder ganz abschaltbar, bzw. regelbar sein, sodass so eine Aufteilung der Menge an Druckluft möglich ist, die durch die mindestens eine Zwischenkammer bzw. durch die mindestens eine Bypassleitung geleitet wird. Selbstverständlich können unterschiedliche Bypassleitungen und/oder Abzweigungen der Bypassleitungen jeweils mit gesondert regelbaren Ventilen versehen sein.

Desweiteren betrifft die Erfindung einen Arbeitszug zur Bearbeitung von Böden, bei denen es sich bspw. um Straßen, Schienenwege, Industrieflächen oder dergleichen handelt. Der Arbeitszug weist eine insbesondere selbstfahrende Bodenbearbeitungsmaschine wie ein Stabilisierer oder Recycler auf. Die Bodenbearbeitungsmaschine weist in einem Rotorgehäuse einen Fräs-/Mischrotor auf. Ferner weist die Bodenbearbeitungsmaschine eine Streueinrichtung zum Ausbringen von Bindemittel auf. Die Streueinrichtung ist mit dem Silofahrzeug verbunden, sodass von dem Silofahrzeug der Streueinrichtung Bindemittel, insbesondere während des Betriebs, zugeführt werden kann. Das Silofahrzeug ist hierbei wie vorstehend beschrieben ausgebildet und vorzugsweise vorteilhaft weitergebildet. Vorzugsweise weist die Streueinrichtung einen Pufferbehälter für Bindemittel auf, wobei sodann der Pufferbehälter über die Förderleitung mit dem Silofahrzeug, bzw. der mindestens einen Zwischenkammer verbunden ist. Der maximale Förderstrom des Bindemittels in der Förderleitung, die mit dem Pufferbehälter der Bodenbearbeitungsmaschine verbunden ist, beträgt vorzugsweise wenigstens 400 kg/min und insbesondere wenigstens 550 kg/min. Die Fördermenge ist insbesondere an die Anforderungen bzw. den Verbrauch anpassbar.

Eine Steuerung der Befüllung des Pufferbehälters erfolgt vorzugsweise ausgehend von der Bodenbearbeitungsmaschine. Dies kann beispielsweise durch entsprechende Füllstandssensoren in dem Pufferbehälter erfolgen. Die Befüllung des Pufferbehälters kann hierbei permanent oder intermittierend erfolgen.

Nachfolgend wird die Erfindung anhand einer bevorzugten Ausführungsform unter Bezugnahme auf die anliegenden Zeichnungen näher erläutert.

Es zeigen:

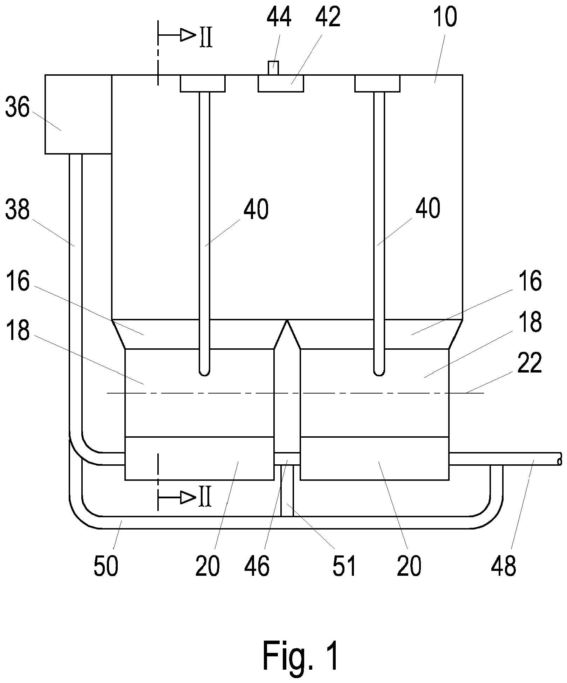

- Fig. 1:: eine schematische Rückansicht eines Silofahrzeugs,
- Fig. 2:: eine schematische Schnittansicht entlang der Linie II-II in Fig.1 und
- Fig. 3: eine schematische Seitenansicht einer Bodenbearbeitungsmaschine.

Das Silofahrzeug weist einen Vorratsbehälter 10 für Bindemittel auf. Der Vorratsbehälter 10 weist an einer Unterseite 12 zwei Öffnungen 14 auf, die im dargestellten Ausführungsbeispiel jeweils über ein Trichterelement 16 mit jeweils einer mechanischen Fördereinrichtung 18 verbunden sind, wobei es sich im dargestellten Ausführungsbeispiel bei der Fördereinrichtungen 18 um Zellenradförderer handelt. Die Zellenradförderer 18 sind jeweils mit einer Zwischenkammer 20 verbunden.

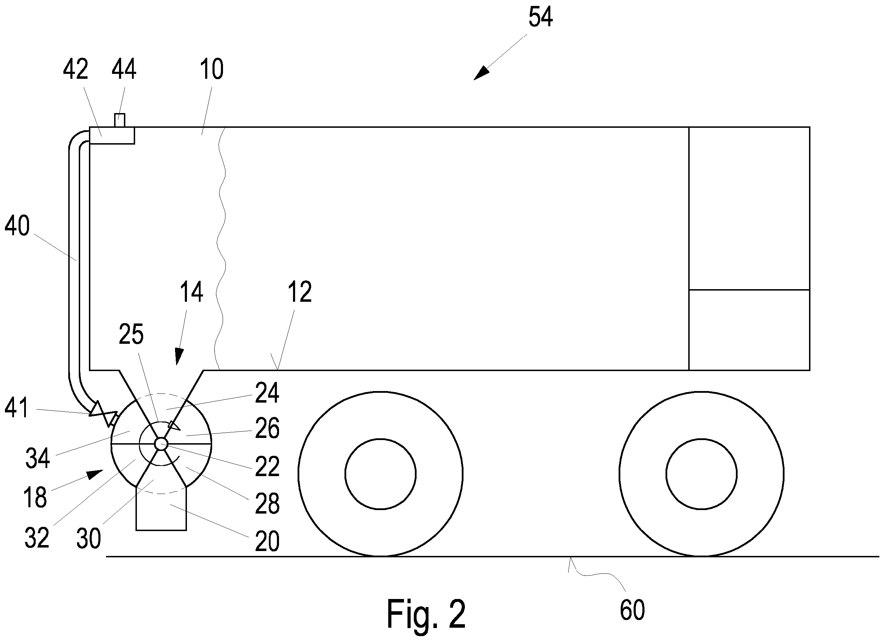

Aus dem Vorratsbehälter 10 gelangt Bindemittel durch die Öffnungen 14 in die Trichterelemente 16. Dies erfolgt insbesondere durch Schwerkraft, wobei ggf. zusätzlich in dem Vorratsbehälter eine mechanische Fördereinrichtung, wie ein Schneckenförderer oder dergleichen vorgesehen sein kann, beispielsweise um das Bindemittel von einem von der Öffnung 14 ferngelegenen Ende des Vorratsbehälters 10 zu der Öffnung 14 zu transportieren. Das Bindemittel rutscht durch die Trichtereinrichtungen 16 in eine obere Förderkammer, die sich in der Position 24 (Fig. 2) des Zellenradförderers 18 befindet. Der Zellenradförderer 18 rotiert um eine Achse 22 in Fig. 2 in Richtung des Pfeils 25. Hierdurch werden nach der Kammer in Position 24 die gerade mit Bindemittel befüllt wird, die Kammern in den Positionen 34 und 32 mit Bindemittel gefüllt. Aus der Förderkammer in Position 30, die der Förderkammer in Position 24 gegenüberliegend angeordnet ist, gelangt das Bindemittel aufgrund der Schwerkraft in die Zwischenkammer 20. Die sich in Rotationsrichtung 25 an die Förderkammer in Position 24 anschließenden beiden Förderkammern in den Positionen 32 und 34, sind leer. Die Förderkammern in den Positionen 26 und 28 sind bereits mit Bindemittel befüllt und werden bei fortschreitender Rotation in Richtung des Pfeils 25 des Zellenförderers 18 nacheinander in die Zwischenkammer 20 entleert.

Für die pneumatische Förderung des Bindemittels wird mittels einer Fördereinrichtung, bei der es sich im dargestellten Ausführungsbeispiel um einen Kompressor 36 handelt, Druckluft in die Zwischenkammern 20 eingebracht. In den Zwischenkammern 20 herrscht somit ein gegenüber der Umgebung erhöhter Druck. Über die mit dem Kompressor 36 verbundene Druckleitung 38 gelangt Druckluft in die in Förderrichtung erste Zwischenkammer 20. Da die in Förderrichtung erste Zwischenkammer 20 über eine Verbindungsleitung 46 mit der in Förderrichtung zweiten Zwischenkammer 20 verbunden ist, herrscht auch in dieser erhöhter Druck. Die entsprechende Druckluft gelangt auch in die Förderkammer des Zellenradförderers 18, die sich in der Position 30 befindet. In der Kammer in Position 32 herrscht somit ein erhöhter Druck. Der auch in der Kammer in Position 34 zunächst erhöhte Druck wird über eine Druckentlastungseinrichtung abgeführt. Die Druckentlastungseinrichtung umfasst im dargestellten Ausführungsbeispiel zumindest einen Kanal oder eine Leitung 40, die mit einem Bereich der mechanischen Fördereinrichtung 18 verbunden ist, indem die entleerte Förderkammer, beispielsweise im Bereich der Position 34 weder mit der Zwischenkammer 20 noch mit dem Vorratsbehälter 10 verbunden ist. Ggf. kann in der Leitung 40 insbesondere in dem Bereich in dem die Leitung 40 mit dem Zellenradförderers 18 verbunden ist, ein Ventil 41 insbesondere ein Rückschlagventil vorgesehen sein.

Da ggf. in der Kammer in Position 34 noch Reste an Bindemittel vorhanden sein können, können diese in die Druckentlastungseinrichtung 40, 41 gelangen. Die Druckentlastungseinrichtung 40, 41 ist daher mit dem Vorratsbehälter 10 verbunden, sodass ggf. in der Leitung 40 vorhandenes Bindemittel zurück in den Vorratsbehälter 10 gefördert wird. Um das Entstehen von Überdruck in dem Vorratsbehälter 10 zu vermeiden, weist der Vorratsbehälter 10 einen mit einem Filter 42 verbundenen Überdruckauslass 44 auf. Um ein Verwirbeln von Bindemitteln in dem Vorratsbehälter 10 zu vermeiden, ist die Leitung 40 in einem oberen Bereich des Vorratsbehälters 10 mit diesem verbunden.

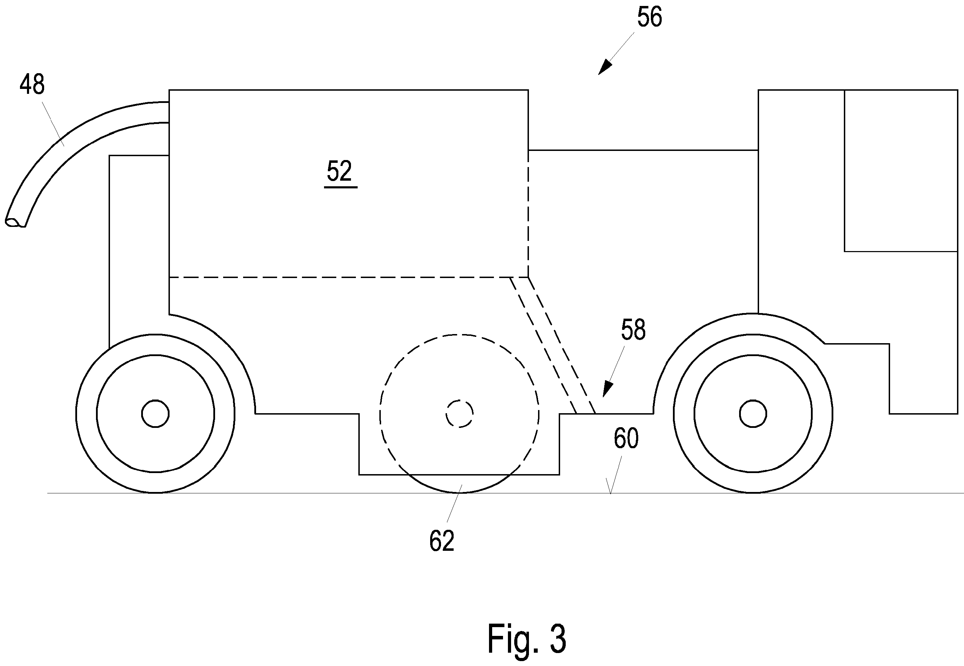

Zum Fördern des Bindemittels zu der Streueinrichtung, bzw. einem Pufferbehälter 52 (Fig. 3) der Streueinrichtung, wird mit Hilfe des Kompressors 36 über die Druckleitung 38 unter Druck stehende Luft der in Förderrichtung ersten Zwischenkammer 20 zugeführt. Die erste Zwischenkammer 20 ist über die Verbindungsleitung 46 mit der in Strömungsrichtung zweiten Zwischenkammer 20 verbunden, sodass Bindemittel aus der ersten Zwischenkammer 20 durch die Verbindungsleitung 46 in die zweite Zwischenkammer 20 gefördert wird. Die in Strömungsrichtung zweite Zwischenkammer 20 ist über eine Förderleitung 48 mit der Streueinrichtung, bzw. dem Pufferbehälter 52 der Streueinrichtung verbunden.

Ferner ist in Strömungsrichtung vor der ersten Zwischenkammer 20 mit der Druckleitung 38 eine die beiden Zwischenkammern 20 überbrückende Bypassleitung 50 verbunden, die in Strömungsrichtung nach der zweiten Zwischenkammer 20 mit der Förderleitung 48 verbunden ist. Über eine Abzweigleitung 51 ist die Bypassleitung 50 mit der Verbindungsleitung 46 verbunden. Zur Regelung der Aufteilung der Druckluft kann beispielsweise in der Bypassleitung 50 und /oder in der Abzweigleitung ein insbesondere regelbares Ventil angeordnet sein.

Je nach Ausgestaltung umfasst die pneumatische Fördereinrichtung somit eine Druckluftquelle, bei der es sich im dargestellten Ausführungsbeispiel um einen Kompressor 36 handelt und Leitungen. Neben der Druckluftleitung 38 kann die pneumatische Fördereinrichtung die Leitungen 46, 50, 51 und 48 aufweisen.

Zur Förderung des Bindemittels wird die pneumatische Fördereinrichtung mit Druck aus einer Druckquelle, im Ausführungsbeispiel dem Kompressor 36 beaufschlagt. Dies führt zu einem gegenüber der Umgebung erhöhten Druck in der Fördereinrichtung. Zur Übergabe des Bindemittels von den Förderkammern in den Zwischenbehälter 20 werden die Förderkammern luftdurchlässig mit dem Zwischenbehälter 20 und damit der gegenüber der Umgebung Überdruck aufweisenden pneumatischen Fördereinrichtung verbunden. Somit herrscht im dargestellten Ausführungsbeispiel in den Förderkammern in Position 30 und 32 ebenfalls gegenüber der Umgebung erhöhter Luftdruck. In der Förderkammer in Position 30 herrscht erhöhter Luftdruck aufgrund der aktuell vorhandenen luftdurchlässigen Verbindung zur pneumatischen Fördereinrichtung. In der Förderkammer in Position 32 wurde der Druck erhöht als diese zur Bindemittelabgabe luftdurchlässig mit der Zwischenkammer 20 verbunden war. Bei fortschreitender Rotation der Zellenradschleuse 18 wurde diese luftdurchlässige Verbindung unterbrochen, der vorhandene Druck kann jedoch nicht abgebaut werden. In der Position 34 befindet ist an der mechanischen Fördereinrichtung 18 erfindungsgemäß die Druckentlastungseinrichtung 40, 41 vorgesehen.

Das in Figur 2 dargestellte Silofahrzeug 54 ist über die Förderleitung 48 mit der in Figur 3 dargestellten Bodenbearbeitungsmaschine 56 verbunden. Die Bodenbearbeitungsmaschine 56 weist den Pufferbehälter 52 auf, der mit der Förderleitung 48 verbunden ist und zum Zwischenpuffern von Bindemittel dient. Mit dem Pufferbehälter 52 ist eine nicht näher dargestellte Streueinrichtung 58 verbunden. Über die Streueinrichtung 58 wird Bindemittel auf eine Oberfläche 60 eines abzufräsenden Bodens, wie einer Straßenoberfläche, gestreut. Die Oberfläche 60 wird sodann mit Hilfe eines Fräs- und Mischrotors 62 abgetragen. Eine derartige Bodenbearbeitungsmaschine mit Pufferbehälter 52 ist beispielsweise in DE 10 2009 008 884 beschrieben.

## Patentansprüche

1. Silofahrzeug (54) zur Bereitstellung von Bindemitteln zur Bodenstabilisierung für eine Streueinrichtung, mit
einem Vorratsbehälter (10) für Bindemittel,
einer Zwischenkammer (20),
einer mit dem Vorratsbehälter (10) verbundenen mechanischen Fördereinrichtung (18) zum Fördern von Bindemitteln aus dem Vorratsbehälter (10) in die Zwischenkammer (20),
einer mit der Zwischenkammer (20) verbundenen pneumatischen Fördereinrichtung (36) zum Fördern des Bindemittels zu der Streueinrichtung und
einer Druckentlastungseinrichtung (40, 41) die mit der mechanischen Fördereinrichtung (18) verbunden ist,
**dadurch gekennzeichnet, dass**
eine Entlüftungsleitung der Druckentlastungseinrichtung (40, 41) mit dem Vorratsbehälter (10) verbunden ist.

2. Silofahrzeug (54) nach Anspruch 1, **dadurch gekennzeichnet, dass** die mechanische Fördereinrichtung (18) als Schwerkraftförderer ausgebildet ist.

3. Silofahrzeug (54) nach Anspruch 1 oder 2, **dadurch gekennzeichnet, dass** die mechanische Fördereinrichtung (18) Förderkammern (24, 26, 28, 30, 32, 34) aufweist und vorzugsweise als Zellenradförderer ausgebildet ist.

4. Silofahrzeug (54) nach Anspruch 3, **dadurch gekennzeichnet, dass** die Druckentlastungseinrichtung (40, 41) in einem Bereich mit der mechanischen Fördereinrichtung (18) verbunden ist, in dem eine diesen Bereich passierende Förderkammer (34) weder mit dem Vorratsbehälter (10) noch mit der Zwischenkammer (20) verbunden ist.

5. Silofahrzeug (54) nach Ansprüchen 1 bis 4, **dadurch gekennzeichnet, dass** der Vorratsbehälter (10) einen Überdruckauslass (44) mit Filtereinrichtung (42) aufweist.

6. Silofahrzeug (54) nach Anspruch 5, **dadurch gekennzeichnet,**
**dass** die Druckentlastungseinrichtung, insbesondere über eine Leitung (40) mit dem Überdruckauslass (44) verbunden ist.

7. Silofahrzeug (54) nach Ansprüchen 1 bis 6, **dadurch gekennzeichnet, dass** die pneumatische Fördereinrichtung (36) einen Kompressor aufweist, der insbesondere über eine Druckleitung (38) mit der Zwischenkammer (20) verbunden ist.

8. Silofahrzeug (54) nach Ansprüchen 1 bis 7, **dadurch gekennzeichnet, dass** der Vorratsbehälter (10) mit mindestens zwei mechanischen Fördereinrichtungen (18) verbunden ist.

9. Silofahrzeug (54) nach Anspruch 8, **dadurch gekennzeichnet, dass** jede mechanische Fördereinrichtung (18) mit einer separaten Zwischenkammer (20) verbunden ist, wobei die Zwischenkammern (20) vorzugsweise bezüglich der pneumatischen Fördereinrichtung in Reihe angeordnet sind.

10. Silofahrzeug (54) nach Ansprüchen 1 bis 9, **dadurch gekennzeichnet, dass** eine, die mindestens eine Zwischenkammer (20) umgehende pneumatische Bypassleitung (50) vorgesehen ist, die mit einer Förderleitung (48) zum Zuführen des Bindemittels zu der Streueinrichtung verbunden ist.

11. Arbeitszug zur Bearbeitung von Böden, mit
einer selbstfahrenden Bodenbearbeitungsmaschine mit einem in einem Rotorgehäuse angeordneten Fräs-/Mischrotor und einer Streueinrichtung zum Ausbringen von Bindemittel und
einem Silofahrzeug (54) nach einem der Ansprüche 1 bis 10 zum Zuführen von Bindemitteln zur Streueinrichtung.

12. Arbeitszug nach Anspruch 11, **dadurch gekennzeichnet, dass** die Streueinrichtung einen Pufferbehälter für Bindemittel aufweist, der mit der Förderleitung (48) des Silofahrzeugs verbunden ist.

## Claims

1. Dry-bulk tanker (54) for the provision of binding agents for soil stabilization for a spreading device, comprising
a storage container (10) for binding agent,
an intermediate chamber (20),
a mechanical conveying device (18) for conveying binding agents from the storage container (10) into the intermediate chamber (20) connected to the storage container (10),
a pneumatic conveying device (36) for conveying the binding agent to the spreading device connected to the intermediate chamber (20), and
a pressure relief device (40, 41) which is connected to the mechanical conveying device (18),
**characterized in that**
a vent line of the pressure relief device (40, 41) is connected to the storage container (10).

2. Dry-bulk tanker (54) in accordance with claim 1, **characterized in that** the mechanical conveying device (18) is designed as a gravity conveyor.

3. Dry-bulk tanker (54) in accordance with claim 1 or 2, **characterized in that** the mechanical conveying device (18) comprises conveying chambers (24, 26, 28, 30, 32, 34) and is preferably designed as a rotary feeder.

4. Dry-bulk tanker (54) in accordance with claim 3, **characterized in that** the pressure relief device (40, 41) is connected to the mechanical conveying device (18) in an area in which a conveying chamber (34) passing through this area is connected neither to the storage container (10) nor to the intermediate chamber (20).

5. Dry-bulk tanker (54) in accordance with claims 1 to 4, **characterized in that** the storage container (10) comprises a positive pressure outlet (44) with a filter device (42).

6. Dry-bulk tanker (54) in accordance with claim 5, **characterized in that** the pressure relief device is connected to the positive pressure outlet (44) in particular via a line (40).

7. Dry-bulk tanker (54) in accordance with one of the claims 1 to 6, **characterized in that** the pneumatic conveying device (36) comprises a compressor which is connected to the intermediate chamber (20) in particular via a pressure line (38).

8. Dry-bulk tanker (54) in accordance with claims 1 to 7, **characterized in that** the storage container (10) is connected to at least two mechanical conveying devices (18).

9. Dry-bulk tanker (54) in accordance with claim 8, **characterized in that** each mechanical conveying device (18) is connected to a separate intermediate chamber (20), wherein the intermediate chambers (20) are arranged in series with respect to the pneumatic conveying device.

10. Dry-bulk tanker (54) in accordance with claims 1 to 9, **characterized in that** a pneumatic bypass line (50) bypassing the at least one intermediate chamber (20) is provided which is connected to a conveying line (48) for feeding the binding agent to the spreading device.

11. Work train for working soils, comprising
a self-propelled ground working machine with a milling/mixing rotor arranged in a rotor housing, and a spreading device for spreading binding agent, and
a dry-bulk tanker (54) in accordance with one of the claims 1 to 10 for feeding binding agents to the spreading device.

12. Work train in accordance with claim 11, **characterized in that** the spreading device comprises a buffer container for binding agent which is connected to the conveying line (48) of the dry-bulk tanker.

## Revendications

1. Véhicule citerne (54) permettant de fournir des liants destinés à la stabilisation du sol pour un dispositif d'épandage, doté
d'un réservoir (10) de liant,
d'une chambre intermédiaire (20),
d'un dispositif de transport mécanique (18) relié au réservoir (10) permettant de transporter des liants depuis le réservoir (10) dans la chambre intermédiaire (20),
d'un dispositif de transport pneumatique (36) relié à la chambre intermédiaire (20) permettant de transporter le liant vers le dispositif d'épandage,
d'un dispositif de décharge de pression (40, 41), lequel est relié au dispositif de transport mécanique (18),
**caractérisé en ce qu'**une conduite de ventilation du dispositif de décharge de pression (40, 41) est reliée au réservoir (10).

2. Véhicule citerne (54) selon la revendication 1, **caractérisé en ce que** le dispositif de transport mécanique (18) est réalisé comme transporteur par gravité.

3. Véhicule citerne (54) selon la revendication 1 ou 2, **caractérisé en ce que** le dispositif de transport mécanique (18) comporte des chambres de transport (24, 26, 28, 30, 32, 34) et est de préférence réalisé comme transporteur à roue cellulaire.

4. Véhicule citerne (54) selon la revendication 3, **caractérisé en ce que** le dispositif de décharge de pression (40, 41) est relié dans une zone au dispositif de transport mécanique (18), une chambre de transport (34) passant cette zone n'étant reliée ni au réservoir (10) ni à la chambre intermédiaire (20).

5. Véhicule citerne (54) selon les revendications 1 à 4, **caractérisé en ce que** le réservoir (10) comporte une sortie de surpression (44) dotée d'un dispositif de filtre (42).

6. Véhicule citerne (54) selon la revendication 5, **caractérisé en ce que** le dispositif de décharge de pression est relié à la sortie de surpression (44), en particulier par le biais d'une conduite (40).

7. Véhicule citerne (54) selon les revendications 1 à 6, **caractérisé en ce que** le dispositif de transport pneumatique (36) comporte un compresseur, lequel est relié à la chambre intermédiaire (20) en particulier par le biais d'une conduite sous pression (38).

8. Véhicule citerne (54) selon les revendications 1 à 7, **caractérisé en ce que** le réservoir (10) est relié à au moins deux dispositifs de transport mécaniques (18).

9. Véhicule citerne (54) selon la revendication 8, **caractérisé en ce que** chaque dispositif de transport mécanique (18) est relié à une chambre intermédiaire (20) séparée, dans lequel les chambres intermédiaires (20) sont de préférence disposées en série par rapport au dispositif de transport pneumatique.

10. Véhicule citerne (54) selon les revendications 1 à 9, **caractérisé en ce qu'**est prévue une conduite de contournement (50) pneumatique évitant l'au moins une chambre intermédiaire (20), laquelle est reliée à une conduite de transport (48) afin d'alimenter le dispositif d'épandage en liant.

11. Train de travaux permettant le traitement de sols, doté
d'un engin de traitement de sol automoteur dotée d'un rotor de fraisage/mélange disposé dans un carter de rotor et d'un dispositif d'épandage permettant de déployer du liant et
d'un véhicule citerne (54) selon l'une des revendications 1 à 10 permettant d'alimenter le dispositif d'épandage en liant.

12. Train de travaux selon la revendication 11, **caractérisé en ce que** le dispositif d'épandage comporte un récipient tampon pour le liant, lequel est relié à la conduite de transport (48) du véhicule citerne.
